# EUROPEAN PATENT SPECIFICATION

(11) **EP 1 941 422 B1**
(45) Date of publication and mention of the grant of the patent: **27.01.2010**
(21) Application number: 05808832.9
(22) Date of filing: 16.09.2005
(51) Int. Cl.: G06K 9/00

(54) **BIOMETRIC DETECTOR AND IDENTITY CONTROL DEVICE**
BIOMETRISCHER DETEKTOR UND IDENTITÄTSKONTROLLEINRICHTUNG
DÉTECTEUR BIOMÉTRIQUE ET DISPOSITIF DE CONTRÔLE D'IDENTITÉ

(43) Date of publication of application: 09.07.2008
(73) Proprietor: Farimex S.A., 1206 Geneva (CH)
(72) Inventor: NIKLAN, Alexandre, 1223 Cologny (Geneva) (CH)
(74) Representative: Dini, Roberto
(86) International application number: PCT/IB2005/002741
(87) International publication number: WO 2007/031811

(56) References cited:
- EP-A- 0 348 182
- WO-A-01/59733
- FR-A- 2 861 200
- US-A1- 2002 083 329
- US-A1- 2005 097 338
- US-B1- 6 229 906
- US-B1- 6 320 177

## Description

The present invention describes a biometric detector and an identity control device which makes use of it.

Electronic fingerprints detectors have been known for a long time.

Electronic fingerprints detector usually comprises an optical sensor or a capacitive sensor; said sensors are integrated on a chip, i.e. a little die made of semiconductor material.

Until a few years ago, said detectors were only employed in professional applications with very high security requirements.

Recently, in the area of consumer electronics, detection of fingerprints has started to spread. For example, on the market some personal computers and some mobile phones can be found that provide the detection of fingerprints to control the access (usually known as "login") to the system, i.e. to verify the identity of a user and permit the use of the apparatus only to the authorized user or users; this is an alternative way or an addition way to input credentials (eg. PIN code or UserID/password) through a keyboard.

Yet, in some cases, the cost of said detectors is still relatively high (as the area of the chip of the sensor is typically about 4 cm²); whereas, in other cases, their reliability and ease of use (particularly for the optical sensors of the scanning type) is still relatively low.

US 2002083329 discloses a compact miniature-size optical fingerprint reading unit for portable devices (cellular phones) equipped with a photo camera which includes an optical system - lens and a light condensing unit- to direct an image of the finger on the contact surface through the lens for capture by the digital camera.

US patent number US 6,320,177 discloses a control device wherein a fingertip is placed in contact with an optically transmissive platen which is illuminated from backside by a light emitting diode. The platen comprises an injection molded plastic housing which also serves as lens for focusing the light on a detector. In one embodiment, the light emitting diode and the detector are fully integrated with the plastic housing.

General object of the present invention is to provide a biometric detector which overcomes the drawbacks of the prior art.

Said object is substantially obtained through a biometric detector having the features described in the annexed claims.

Said detector can be advantageously used in an identity control device, in particular for a security system. Said identity control device, having the features described in the annexed claims, constitutes a further aspect of the present invention.

The present invention will become apparent from the following description to be considered together with the annexed drawings, wherein:
Fig.1 shows in a schematic way an embodiment of a biometric detector according to the present invention,
Fig.2 shows in a simplified way a block diagram of a first embodiment of an identity control device according to the present invention, and
Fig.3 shows in a simplified way a block diagram of a second embodiment of an identity control device according to the present invention.

The following description and the annexed drawings are supplied by way of non-limiting example.

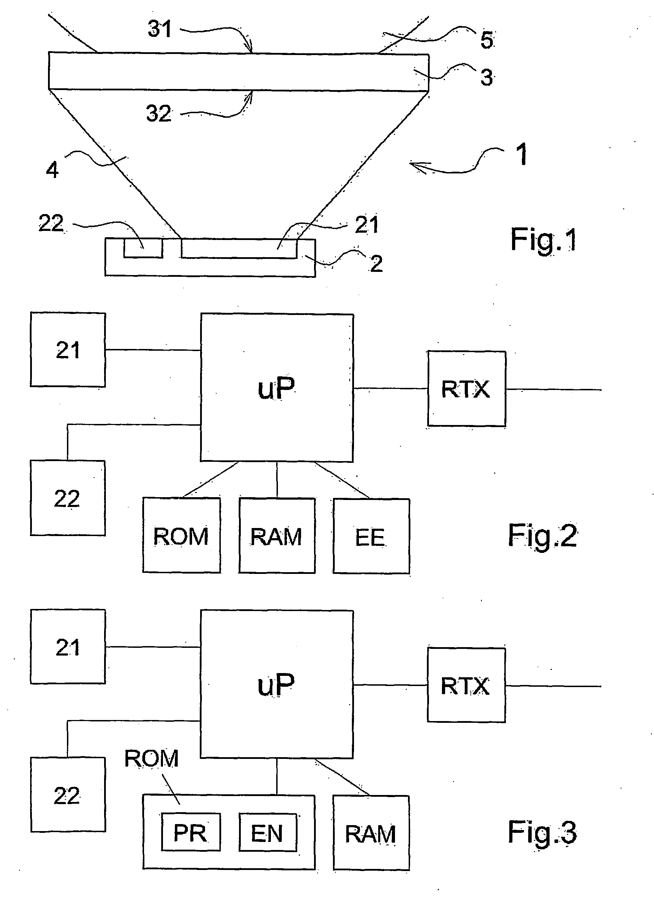

Fig.1 shows a biometric detector, indicated as a whole with reference number 1.

The detector 1 comprises a chip 2, a small plate 3 made of plastic transparent material, and a lens system 4.

An optical sensor 21 for the visible light, an optical sensor 22 for the infrared light, together with some other piece of circuitry (not shown in the drawing) for the management of the two sensors are integrated in the chip 2.

The plate 3 has a first side 31 on which, in the drawing, a fingertip 5 of a human being finger is laid against and a second side 32 in contact with the lens system 4.

The lens system 4 is in contact on the one side with the plate 3 and on the other side with the chip 2, in particular with the sensor 21.

A detector, as the one shown in Fig.1, permits to detect fingerprints, as it will be better described in the following. Said a detector (in particular its sensors) is typically connected to an electronic data processing system; in this way, the fingerprints detected by the sensor can be stored and processed.

In Fig.1 the side 31 has a rectangular outline (1,5 cm x 2,5 cm) with a perfectly flat development; said side can also have a different outline, e.g. circular or elliptical (similar to the outline of a fingertip); said side can also have a different development, e.g. curved (matching the shape of a fingertip). Moreover, the plate 3 could extend more than required by the fingertip itself for reasons not strictly connected to the detection of fingerprints.

The fingertip is leant against the side 31 in order to enable the detector 1 to detect a fingerprint.

It is worthwhile pointing out that the detection of the fingerprint could take place in the same way even if the fingertip shouldn't be perfectly leant against the side 31; however, in this case, there could be errors and/or distortion of the detected fingertip image.

Moreover, it is also worthwhile pointing out the fact that the fingertip could contact only in its peripheral area and not in its central area; in this case, the plate side would have an outline of a frame.

Finally, it is worthwhile pointing out that the plate side of the detector could be positioned horizontally, vertically or obliquely; the detector functionality is not influenced by its layout; so said positioning will be determined by other factors, such as the ease of use by the user.

The detector 1 shown in Fig.1 can be advantageously used in an identity control device (e.g. in a home security system, in other words for a home anti-theft device) as those shown schematically in Fig. 2 and Fig.3.

The identity control device shown in Fig.2 comprises a microprocessor uP connected to the sensors 21 and 22 of the detector 1. Moreover, the microprocessor uP is connected to a ROM-type memory ROM, to a RAM-type memory RAM and to a EEPROM-type memory EE (therefore electrically writable and erasable by the processor uP, but non-volatile). Finally, the microprocessor uP is connected to a transceiver unit RTX for the transmission and the reception of information to and from a central unit for example of a security system.

The above mentioned devices can be replaced by equivalent devices; for example, the microprocessor can be replaced e.g. by a microcontroller, the ROM-type memory by e.g. an EPROM-type memory, the EEPROM-type memory by e.g. a FLASH-type memory.

The identity control device shown in Fig.3 differs from the device shown in Fig. 2 essentially in that there is no EEPROM-type memory. Moreover, not only does the memory ROM comprise a section PR devoted to containing a device control program PR, but also to containing program EN for a fingerprint coding.

An identity control device as the one shown in Fig.2 or in Fig.3 can be located, for example, beside the main door of an apartment and can be used to activate the security system after having left the apartment and to disactivate it before entering the apartment.

In general, a biometric detector, according to the present invention, comprises an optical sensor, a surface where to lean a fingertip, and optical means to transfer an image from said surface to said sensor. In particular, not only is the image transferred, but also reduced by the optical means.

The optical sensor is preferably sensitive to the visible light; in fact fingerprints details are perfectly detectable through said light, i.e. "ridges" and "valleys".

The sensor receives light reflected by the fingertip surface leant against the detector contact surface. Said light can come, for example, from means which generate light and which are integrated in the detector. Alternatively and advantageously, said light can come from the environment in which the detector is located and be deflected and directed towards and/or concentrated on the fingertip. Known solutions which could be used for said illumination are described, for example, in the American Patents 2,899,861 and 5,508,849.

The above mentioned optical means can be made in different ways. For example, they can comprise or be constituted by a lens; alternatively, they can comprise o be constituted by more lenses, i.e. by a lens system, as the example of Fig.1.

If the optical means are such to reduce the image from the area of the detector contact surface to the sensor area, as the example of Fig.1 in relation to the surface of the side 31 and to the sensor 21, the area of the sensor can be smaller (even a lot smaller) then the area of the contact surface of the sensor; in this way, the sensor can have reduced dimensions and therefore reduced costs.

The detector according to the present invention can advantageously comprise a transparent plate which forms the detector contact surface, as in the case of the plate 3 of the example shown in Fig.1; said plate can also help to protect the optical sensor and/or the optical means.

The plate is typically flat and it is provided with a first side, which in the example of Fig.1 corresponds to the side 31, and with a second side, which in the example of Fig.1 corresponds to the side 32; the first side is adapted to come into contact with a fingertip and the second side is preferably in contact with optical lens means, which in the example of Fig.1 corresponds to the lens system 4.

Through the structure described above it is possibile to detect a fingerprint of a fingertip leant against the detector contact surface. Nevertheless, said structure does not distinguish between a flesh human being fingertip and a plastic fingertip (that is to say a false fingertip); nor it can distinguish between a living human being fingertip and a fingertip of a dead person; nor it can distinguish between a fingertip of a conscious person and an unconscious person.

In general, fingerprints detectors, especially for applications in the area of consumer electronics, cannot make this distinction. This has been so far an underestimated problem and it represents a great defect of said known detectors especially when they are being used, for example, for identity control devices for security systems.

Therefore, the biometric detector according to the present invention can comprise further means to check the life status of a human being having a fingertip in contact with the contact surface of the detector, which in the example shown in Fig.1 corresponds to the side 31. Moreover, the biometric detector according to the present invention can comprise further means to check the conscious status of a human being having a fingertip in contact with the contact surface of the detector, which in the example shown in Fig.1 corresponds to the side 31.

The two checks mentioned above can be provided in different ways. Of course, for application in the area of consumer electronics, ways must be used which are simple and economical to provide; in said applications the accuracy of the check can be partially given up in favour of simplicity and inexpensiveness.

A first way to check the life status is to detect if there is blood flow in the finger of which the fingertip is leant against the contact surface of the sensor. This can be done in a very simple and economical way through an infrared light optical sensor; in fact the blood is hot and therefore it emits infrared light.

A second way to check life status is to detect the heart beat of the human being whose fingertip is leant against the contact surface of the sensor. This can be done in a simple and economical way through an infrared light optical sensor; in fact the amount of blood in the finger varies with the heart beat

As explained above, the check of the life status can be done with a further sensor, which in the example shown in Fig.1 corresponds to the sensor 22; typically, said further sensor in simpler than the sensor adapted to detect the fingerprint. It is clear that the second way of checking requires more processing of the signal coming from the sensor and typically a more accurate sensor.

It is worthwhile pointing out that the detection of blood flow enables to measure blood pressure and/or the tracing of the heart beat.

Not only does the life status be checked from the blood pressure and/or the heart beat, but a partial identification of the human being can also be done; this can be advantageously added to the identification carried out through fingerprints.

Not only does the life status be checked from the blood pressure and/or the heart beat, but a human being conscious status can also be partially checked.

In the area of anaesthesia, many studies on the conscious status of a human being have been carried out. Interesting information and solutions applicable to the detector according to the present invention can be obtained, for example, from the American patents 4,788,982 and 6,117,075 and 6,801,803.

According to what previously said, the biometric detector according to the present invention comprises typically one or two sensors; a first sensor 21, shown in Fig.1, of the optical type, is required for detecting the fingerprints of a human being and a second sensor 22, shown in Fi.1, preferably of the optical type as well, is required for detecting the status of the human being.

The fingerprint sensor is advantageously integrated in a chip 2, shown in Fig.1, and preferably of the APS type [Active Pixel Sensor] or of the CCD type [Charge Coupled Device]. The APS type is advantageous in that it can be provided in the CMOS technology; therefore, the cost of the chip is limited as the CMOS technology is widely spread, it is easy to integrate in the chip other circuitry for example so as to process a signal provided by the sensor, and the chip consumes little electric power.

The human status sensor can be integrated either in the same chip, as shown in Fig.1, or in a different chip. If the two sensors are integrated in the same chip, it is preferable to have them provided with the same technology, for example CMOS, or with two compatible technologies. If the two sensors are integrated in two different chips, it is preferable to have them being packaged in the same casing.

In Fig.1, the human status sensor 22 is located beside the fingerprint sensor 21. In fact, both sensors must receive light radiations (both in the visible band and in the infrared band) from the fingertip 5; therefore, the sensor element or the sensor elements of the status sensor 22 could be located inside the area of the chip 2 reserved for the fingerprint sensor 21 In order to detect fingerprints, the detector contact surface (side 31 in Fig.1) will preferably have an area included in the range of about 1 cm² and 5 cm²; in the case of a rectangular area, the area may be, for example, 1 cm x 1 cm or 2 cm x 2 cm or 1,5 cm x 2,5 cm or 2 cm x 2,5 cm.

In order to recognize a fingerprint, the resolution of detection is preferably in the range of about 200dpi and 600dpi and preferably between about 250dpi and 500dpi. In the area of criminal justice, in general it is used a 500dpi resolution. For an application in the area of consumer electronics lower resolutions can be used, typically around 250dpi but even below 200dpi. If a low resolution is used, the space where to store the fingerprints is small and the processing and the comparison between fingerprints is easier as it requires less calculations; additionally, the cost of the sensor is low.

In the light of what described above, the fingerprint sensor comprises preferably between about 50'000 and about 250'000 sensor elements. These are preferably disposed as a matrix, for example square or rectangular; 50'000 elements correspond, for example, to a matrix 200x250 or to a matrix 225x225; 250'000 pixel may correspond, for example, to a matrix 500x500 or to a matrix 400x600.

A sensor as the one indicated above, with present technologies, can occupy a small area of the chip, for example in the range of about 5 and 25 mm² (not only does the area of the chip depend on the sensor but also on the further circuitry integrated in it). These dimensions entail optical means with an magnifying factor comprised between about 3x and 10x.

In the future, smaller chips will be obtained; nevertheless, as the dimensions of the fingerprint do not change over time, optical means with a high magnifying factor are to be used if very small chip are to be used.

The biometric detector according to the present invention has been conceived to be used in an identity control device, in particular for a home security system (in other words, for a home anti-theft system).

The identity control device according to the present invention typically comprises communication means, as for example the transceiver unit RTX shown in Fig.2 and Fig.3, adapted to communicate with a central unit for example of a security system. Said communication can take place through a cable system or an ether system or both through a cable and an ether system; in the security systems, to connect peripheral devices and central unit, it is preferable to use the cable solution as it gives security of communication and of connection in a simpler manner. The connection between the identity control device and the central unit is used, for example, to transmit fingerprints, requests and/or replies of the device, requests and/or replies of the central unit; moreover, the connection may be used to monitor the continuity of the connection between the device and the central unit to detect possible disconnections and/or violation of the device.

In the following an identity control device will be described according to a first possible embodiment.

According to this first possibility, the identity control device according to the present invention is adapted to make a comparison between a fingerprint detected by its detector and a set of fingerprints stored inside the device itself; said set contains the fingerprints of the people whose identity has to be checked. The device shown in Fig.2 corresponds to this first possibility.

To store the set of fingerprints it is opportune to use non-volatile memory means, for example a EE memory shown in Fig.2.

The device can advantageously comprise a processor connected to the detector, in particular to the fingerprint sensor 21, shown in Fig.2, and to fingerprint memory means; the microprocessor is therefore adapted to compare the detected fingerprint and the set of fingerprints. Of course, as common, the microprocessor will typically be connected to a ROM-type memory which contains the program for the device control (and therefore a portion of program for the acquisition of the fingerprints from the fingerprint sensor and a portion of program to carry out the above said comparison) and a RAM-type memory which contains data to be processed. The fingerprints of the people which are to be recognized have to be stored in the fingerprints memory means. Said fingerprints can be inserted in the device by a qualified operator through a suitable apparatus. In alternative or in addition, these can be inserted thanks to the fingerprint sensor itself activating a particular operative procedure of the device.

If a human status sensor 22, shown in Fig. 2, is also foreseen in the detector, the microprocessor will be also connected to said sensor and the ROM-type memory will contain also a portion of program to carry out the check on the human being status (life status and/or conscious status) preferably each time the fingerprint sensor detects a fingerprint.

The device according to the present invention advantageously can first check the human being status and only after, in the case of a positive check, make a comparison between fingerprints.

The result of the comparison between the fingerprints will typically be sent to the central unit of the security system; this can be carried out for example by the microprocessor through communication means, as in the example shown in Fig.2. Preferably, the result of the comparison is sent in a coded format in order to make it difficult to cheat the central unit with a false identification.

An identity control device will be described in the following according to a second possibile embodiment.

According to this second possibility, the comparison between the fingerprint detected by the device and a set of fingerprints stored inside the central unit is carried out by the central unit itself. In this case, there is no necessity for the device to store in a permanent way fingerprints. The device shown in Fig.3 corresponds to such second possibility.

The device can then comprise advantageously a processor connected to the detector, in particular to the fingerprint sensor 21, shown in Fig.3, and to communication means RTX, shown in Fig.3, the microprocessor is then adapted to send the fingerprints acquired by the fingerprint sensor to the central unit through communication means. Naturally, as usual, the microprocessor will be typically connected to a Rom-type memory which contains the control program of the device (and therefore also portions of program to carry out the acquisition of the fingerprints from the fingerprint sensor and to send fingerprints) and a RAM-type memory which contains data in the phase of processing.

Memory means are provided in the central unit for the storage of the fingerprints of the people that are to be identified. Such fingerprints can be inserted directly in the central unit by a qualified operator through a specific apparatus. In alternative or in addition they can be inserted in the central unit thanks to the fingerprints sensor itself (with help of the microprocessor and through the transmission means), activating a particular operative mode of the device and a particular operative mode of the central unit.

If a human status sensor 22, shown in Fig.3, is also foreseen in the detector, the microprocessor will be also connected to that sensor. In this case, the check on the status (life status and/or conscious status) can be carried out by the device or by the central unit.

In the case of status sensor, it is advantageous that the status check is carried out by the device preferably each time the fingerprint sensor detects a fingerprint; to this end, the ROM-type memory will contain also a portion of program to carry out the status check. Only in the case of a positive check, the device will send to the central unit the fingerprint detected by its fingerprint sensor.

The device could also be adapted to sent fingerprints to the central unit in a coded format; in this way, for example, it would be more difficult to cheat the central unit with a false fingerprint ( not really detected by the fingerprint sensor); in the case of coded fingerprints, the ROM-type memory will contain also a portion of program able to perform such coding; said portion of program is indicated with reference EN in Fig.3.

The coding of the fingerprints can be advantageously carried out (for example, for security reasons and/or for memory space reasons) independently by the fact that the fingerprints are sent by the device to the central unit.

The advantageous features of the identity control device according to the present invention described in the following are independent from where the comparison between the fingerprints takes place.

The identity control device according to the present invention can be provided (for example programmed) in such a way to acquire at least two fingerprints consecutively; in this way, a user who thinks of being in danger can lean his/her finger against the sensor a first time in order to make his/her identity be checked and the security system enables the access (for example opening or unblocking the home door) and a second time in order to signal to the central unit of the security system the danger. Naturally, it would be better to think of a minimum interval of time (for example 1 second) and a maximum interval of time (for example 10 seconds) between two consecutive finger presses in order to avoid wrong danger signals.

The identity control device according to the present invention can be provided (for example programmed) in such a way that it realizes automatically when a fingertip is leant against the detector contact surface and then proceed with the acquisition of the relative fingerprint.

As an alternative, the identity control device according to the present invention can be provided (for example programmed) in such a way to issue, for example periodically, a request of fingerprint to a user; this can be done, for example, issuing a vocal signal and/or displaying a text message which invites the user to lean his/her finger against the detector contact surface.

The operations described above can be more easily provided under the control of a microprocessor type control unit.

A very interesting possibility is that the device according to the present invention issues a request of fingerprint typically only in a particular situation which will be specified in the following.

Generally, the comparison between two different fingerprints does not take place comparing directly their two images pixel by pixel, but comparing their "minutiae", i.e. characteristic points of the fingerprint which are obtained by processing the "ridge" and "valleys" profiles. The correspondence between two fingerprints corresponds to the matching of a number of "minutiae" included between 12 and 16, according to the type of application.

As the device according to the present invention has been conceived for applications in the area of consumer electronics simple and economical solution have to be adopted. Furthermore, one may decide to choose a matching requirement not very strict, for example matching of only 10 or 11 "minutiae". Nevertheless, by doing so, there is the risk of having a FRR [False Reject Rate] a slight high and/or a FAR [False Accept rate] a slight high.

In order to prevent such inconvenience, a strict correspondence criterion can be used (for example, programming consequently the identity control device or the central unit of the security system),to detect a fingerprint, to make its comparison with the pre-stored fingerprints, and to issue a request of fingerprints if such comparison has lead to a match above a lower threshold (for example, 10 "minutiae") and below a higher threshold (for example, 14 "minutiae"). Before detecting the second fingerprint, the user could , for example, clean the detector contact surface and/or change finger of his/her free will or under a solicitation of the device or the central unit.

The identity control device according to the present invention can comprise one or more further components in addition to those already mentioned.

The device can comprise a lock (with a mechanical or electronic or magnetic or optical key); this may be used, for example, to activate or disactivate the security system in the case where the biometric detector has a failure or a malfunctioning.

The device can comprise a keyboard, this may be used, for example, to activate or disactivate (through a code) the security system in the case where the biometric detector has a failure or a malfunctioning. The keyboard may also be used to process device maintenance operations and/or programming operations.

The device can comprise a display; this may be used, for example, to display images and/or visible messages for the user corresponding to requests and/or a warnings and/or errors.

The device can comprise a loudspeaker; this may be used, for example, to supply the user with sounds and/or vocal messages corresponding to requests and/or a warnings and/or errors.

The device can comprise a microphone; this can be used, for example, to receive a user's voice; in this way, it is possible to provide a vocal command of the device and/or of the central unit or the recognition of the user's voice in addition to the recognition of the user's fingerprints.

From what described, it is evident that the biometric detector according to the present invention can be provided in a simple and economical way, without compromising its functionality thanks to the use of optical means which reduce the image to be detected.

Moreover, the biometric detector according to the present invention enables to reach a high security as it is not only detected a fingerprint but also the status of the relative human being.

Finally, it should be noted that the detection of the human status can be provided without a consistent complexity increase and rise of cost with respect to a detector with detection of the sole fingerprint.

In the present description the identity control device has always been referred to being used in a home security system according to the present invention.

It is clear that this device can be used also to check the identity of a user of a computer, in particular a personal computer, or of a mobile phone or of a motor vehicle and therefore enabling the access and therefore the use.

## Claims

1. Biometric detector (1) comprising
an optical sensor (2), preferably a visible light optical sensor,
a transparent plate (3) having a first a surface (31) against which to lean a fingertip (5) and a second side (32), and optical means (3,4) adapted to transfer an image from said surface (31) to said sensor (21) reducing it in order to detect a fingerprint through said optical sensor (21), wherein said optical means (3,4) comprise lens means (4)
**characterized in that** said second side (32) is contacted to said lens means (4), and the lens means (4) is in contact with the optical sensor (21).

2. Detector according to claim 1, **characterized in that** it comprises illumination means adapted to illuminate a fingertip (5) when said fingertip (5) is leant against said surface (31).

3. Detector according to claim 1, wherein the area of said surface (31) is larger than the area of said sensor (21).

4. Detector according to any of the preceding claims form 1 to 3,
**characterized in that** it comprises means (22) for checking the life status of a human being having a fingertip (5) leant against said surface (31).

5. Detector according to any of the preceding claim from 1 to 3,
**characterized in that** if comprises means (22) for checking the conscious status of a human being having a fingertip (5) leant against said surface (31).

6. Detector according to claim 4 or 5, wherein said checking means are adapted to detect blood flow inside said finger.

7. Detector according to claim 4 or 5 or 6, wherein said checking means are adapted to detect heart beat of said human being.

8. Detector according to claim 4 or 5 or 6 or 7, wherein said checking means comprises an IR light optical sensor (22).

9. Detector according to any of the preceding claims, wherein said optical sensor (21) is integrated in a chip (2), and is preferably of the CCD and APS type.

10. Detector according to claim 9, wherein said visible light optical sensor (21) and said IR light optical sensor (22) are integrated in the same chip (2).

11. Detector according to claim 9, wherein said visible light optical sensor and said IR light optical sensor are integrated in two different chips, said chips being packaged within the same casing.

12. Detector according to any of the preceding claims, wherein said optical sensor (21) comprises from 50'000 to 250'000 sensor elements organized like a matrix.

13. Detector according to any of the preceding claims, wherein said optical sensor (21) has an area comprised between 5 and 25 mm²

14. Detector according to any of the preceding claims, **characterized by** detecting fingerprints at a resolution higher than 200 dpi, preferably higher than 250 dpi, and lower than 600 dpi, preferably lower than 500 dpi

15. Detector according to any of the preceding claims, wherein said surface (31) has an area comprised between 1 and 5cm².

16. Identity control device, **characterized in that** it comprises a detector (1) according to any of the preceding claims.

17. Device according to claim 16, **characterized in that** it comprises communication means (RTX) adapted to communicate with a central unit of a security system.

18. Device according to claim 16 or 17, **characterized in that** it comprises non-volatile memory means (EE) adapted to store a set of fingerprints.

19. Device according to claim 18, **characterized in that** it comprises a processor (uP) connected to said detector (21,22) and to said memory means, and adapted to carry out a comparison between a fingerprint detected by said detector (1) and fingerprints stored inside said memory means (EE).

20. Device according to claim 19, wherein said processor (uP) is connected to said communication means (RTX) is adapted to send to said central unit the result of said comparison preferably in a coded format.

21. Device according to claim 16 or 17, **characterized in that** it comprises control means (uP), preferably comprising a processor, connected to said detector (21,22) and to said communication means (RTX), and adapted to send to said central unit a fingerprint detected by said detector (1).

22. Device according to claim 21, **characterized in that** it comprises coding means (EN) adapted to code a fingerprint detected by said detector (1).

23. Device according to claims 21 and 22, wherein said control means (uP) are adapted to send to said central unit fingerprints coded by said coding means (EN).

24. Device according to any of the preceding claims from 21 to 23,
**characterized by** the fact that said control means (uP) are adapted to acquire consecutively at least two fingerprints in order to allow the detection of a danger condition by said central unit.

25. Device according to any of the preceding claims from 16 to 24,
**characterized in that** it comprises control means (uP), preferably comprising a microprocessor, adapted to issue a request of fingerprint to a user.

26. Device according to claim 25, wherein said control means (uP) are adapted to issue said request if a previous fingerprint matching operation has lead to a match above a lower threshold and below a higher threshold.

27. Device according to any of the previous claims from 16 to 26,
**characterized in that** it comprises a lock.

28. Device according to any of claims from 16 to 27, **characterized in that** it comprises a keyboard.

29. Device according to any of claims from 16 to 28, **characterized in that** it comprises a display.

30. Device according to any of claims from 16 to 29, **characterized in that** it comprises a loudspeaker.

31. Device according to any of claims from 16 to 30, **characterized in that** it comprises a microphone.

## Patentansprüche

1. Biometrischer Detektor (1) mit
einem optischen Sensor (21), bevorzugt einem optischen Sensor für sichtbares Licht,
einer transparenten Platte (3) mit einer ersten Oberfläche (31), an welche eine Fingerspitze (5) anlegbar ist, sowie einer zweiten Seite (32), und mit optischen Mitteln (3, 4), welche dazu ausgebildet sind, ein Bild von der Oberfläche (31) zu dem Sensor (21) zu übertragen, wobei die optischen Mittel das Bild verkleinern, um einen Fingerabdruck mittels dem optischen Sensor (21) zu detektieren, wobei die optischen Mittel (3, 4) eine Linseneinrichtung (4) umfassen,
**dadurch gekennzeichnet, dass** die zweite Seite (32) die Linseneinrichtung (4) kontaktiert, und dass die Linseneinrichtung (4) in Kontakt mit dem optischen Sensor (21) ist.

2. Detektor nach Anspruch 1, **dadurch gekennzeichnet, dass** der Detektor Anstrahlmittel umfasst, die dazu ausgebildet sind, eine Fingerspitze (5) anzustrahlen, wenn die Fingerspitze (5) an die Oberfläche (31) gelegt wird.

3. Detektor nach Anspruch 1, wobei die Fläche der Oberfläche (31) größer ist als die Fläche des Sensors (21).

4. Detektor nach einem der vorhergehenden Ansprüche 1 bis 3, **dadurch gekennzeichnet, dass** der Detektor Mittel (22) zum Überprüfen des Lebenszustandes eines Menschen, welcher eine Fingerspitze (5) an die Oberfläche (31) gelegt hat, umfasst.

5. Detektor nach einem der vorhergehenden Ansprüche 1 bis 3, **dadurch gekennzeichnet, dass** der Detektor Mittel (22) zum Überprüfen des Bewusstseinszustandes eines Menschen, welcher eine Fingerspitze (5) an die Oberfläche (31) gelegt hat, umfasst.

6. Detektor nach Anspruch 4 oder 5, wobei die Überprüfungsmittel zum Detektieren von Blutfluss innerhalb des Fingers ausgebildet sind.

7. Detektor nach Anspruch 4 oder 5 oder 6, wobei die Überprüfungsmittel zum Detektieren von Herzschlag des Menschen ausgebildet sind.

8. Detektor nach Anspruch 4 oder 5 oder 6 oder 7, wobei die Überprüfungsmittel einen optischen Infrarotlicht-Sensor (22) umfassen.

9. Detektor nach einem der vorhergehenden Ansprüche, wobei der optische Sensor (21) in einem Chip (2) integriert ist und bevorzugt vom Typ CCD ("Charge Coupled Device") und APS ("Active Pixel Sensor") ist.

10. Detektor nach Anspruch 9, wobei der optische Sensor für sichtbares Licht (21) und der optische Infrarotlicht-Sensor (22) in demselben Chip (2) integriert sind.

11. Detektor nach Anspruch 9, wobei der optische Sensor für sichtbares Licht und der optische Infrarotlicht-Sensor in zwei verschiedenen Chips integriert sind, wobei die Chips in demselben Gehäuse montiert sind.

12. Detektor nach einem der vorhergehenden Ansprüche, wobei der optische Sensor (21) zwischen 50.000 und 250.000 in Form einer Matrix gegliederte Sensorelemente umfasst.

13. Detektor nach einem der vorhergehenden Ansprüche, wobei der optische Sensor (21) eine Fläche im Bereich von 5 bis 25 mm² aufweist.

14. Detektor nach einem der vorhergehenden Ansprüche, **gekennzeichnet durch** die Detektion von Fingerabdrücken mit einer Auflösung höher als 200 dpi, bevorzugt höher als 250 dpi und niedriger als 600 dpi, bevorzugt niedriger als 500 dpi.

15. Detektor nach einem der vorhergehenden Ansprüche, wobei die Oberfläche (31) eine Fläche im Bereich von 1 bis 5 cm² aufweist.

16. Identitätskontrolleinrichtung, **dadurch gekennzeichnet, dass** die Identitätskontrolleinrichtung einen Detektor (1) nach einem der vorhergehenden Ansprüche umfasst.

17. Einrichtung nach Anspruch 16, **dadurch gekennzeichnet, dass** die Einrichtung Kommunikationsmittel (RTX) umfasst, welche dazu ausgebildet sind, mit einer Zentraleinheit eines Sicherheitssystems zu kommunizieren.

18. Einrichtung nach Anspruch 16 oder 17, **dadurch gekennzeichnet, dass** die Einrichtung nichtflüchtige Speichermittel (EE) umfasst, die dazu ausgebildet sind, einen Satz von Fingerabdrücken zu speichern.

19. Einrichtung nach Anspruch 18, **dadurch gekennzeichnet, dass** die Einrichtung einen Prozessor (uP) umfasst, welcher mit dem Detektor (21, 22) und den Speichermitteln verbunden ist, und welcher dazu ausgebildet ist, einen Vergleich zwischen einem von dem Detektor (1) detektierten Fingerabdruck mit in den Speichermitteln (EE) gespeicherten Fingerabdrücken anzustellen.

20. Einrichtung nach Anspruch 19, wobei der Prozessor (uP) mit den Kommunikationsmitteln (RTX) verbunden ist, und dazu ausgebildet ist, das Ergebnis des Vergleichs bevorzugt in einem codierten Format zu der Zentraleinheit zu senden.

21. Einrichtung nach Anspruch 16 oder 17, **dadurch gekennzeichnet, dass** die Einrichtung Kontrollmittel (uP) umfasst, welche bevorzugt einen Prozessor aufweisen, welche mit dem Detektor (21, 22) und mit den Kommunikationsmitteln (RTX) verbunden sind und welche dazu ausgebildet sind, einen vom Detektor (1) detektierten Fingerabdruck zu der Zentraleinheit zu senden.

22. Einrichtung nach Anspruch 21, **dadurch gekennzeichnet, dass** die Einrichtung Kodiermittel (EN) umfasst, die dazu ausgebildet sind, einen vom Detektor (1) detektierten Fingerabdruck zu kodieren.

23. Einrichtung nach den Ansprüchen 21 und 22, wobei die Kontrollmittel (uP) dazu ausgebildet sind, von den Kodiermitteln (EN) codierte Fingerabdrücke zu der Zentraleinheit zu senden.

24. Einrichtung nach einem der vorhergehenden Ansprüche 21 bis 23, **dadurch gekennzeichnet, dass** die Kontrollmittel (uP) dazu ausgebildet sind, mindestens zwei Fingerabdrücke aufeinanderfolgend zu erfassen, um die Detektion einer Gefährdungslage durch die Zentraleinheit zu ermöglichen.

25. Einrichtung nach einem der vorhergehenden Ansprüche 16 bis 24, **dadurch gekennzeichnet, dass** die Einrichtung Kontrollmittel (uP) umfasst, welche bevorzugt einen Mikroprozessor umfassen und welche dazu ausgebildet sind, eine Anfrage nach einem Fingerabdruck an einen Nutzer auszugeben.

26. Einrichtung nach Anspruch 25, wobei die Kontrollmittel (uP) dazu ausgebildet sind, die Anfrage auszugeben, wenn eine vorausgehende Fingerabdruck-Abgleichs-Operation zu einem Abgleich über einem unteren Grenzwert und unter einem höheren Grenzwert geführt hat.

27. Einrichtung nach einem der vorhergehenden Ansprüche 16 bis 26, **dadurch gekennzeichnet, dass** die Einrichtung eine Sperrvorrichtung umfasst.

28. Einrichtung nach einem der Ansprüche 16 bis 27, **dadurch gekennzeichnet, dass** die Einrichtung eine Tastatur umfasst.

29. Einrichtung nach einem der Ansprüche 16 bis 28, **dadurch gekennzeichnet, dass** die Einrichtung eine Anzeige umfasst.

30. Einrichtung nach einem der Ansprüche 16 bis 29, **dadurch gekennzeichnet, dass** die Einrichtung einen Lautsprecher umfasst.

31. Einrichtung nach einem der Ansprüche 16 bis 30, **dadurch gekennzeichnet, dass** die Einrichtung ein Mikrofon umfasst.

## Revendications

1. Détecteur biométrique (1) comprenant :
un capteur optique (21), de préférence, un capteur optique de lumière visible,
une plaque transparente (3) comportant une première surface (31) contre laquelle on appuie le bout d'un doigt (5) et un second côté (32), et des moyens optiques (3, 4) adaptés pour transférer une image provenant de ladite surface (31) vers ledit capteur (21) la réduisant afin de détecter une empreinte digitale par l'intermédiaire dudit capteur optique (21), dans lequel lesdits moyens optiques (3, 4) comportent des moyens de lentille (4),
**caractérisé en ce que** ledit second côté (32) se trouve en contact avec lesdits moyens de lentille (4), et **en ce que** les moyens de lentille (4) se trouvent en contact avec le capteur optique (21).

2. Détecteur selon la revendication 1, **caractérisé en ce qu'**il comprend des moyens d'éclairage adaptés pour éclairer le bout d'un doigt (5) lorsque ledit bout de doigt (5) est appuyé contre ladite surface (31).

3. Détecteur selon la revendication 1, dans lequel l'aire de ladite surface (31) est plus grande que l'aire dudit capteur (21).

4. Détecteur selon l'une quelconque des revendications précédentes 1 à 3, **caractérisé en ce qu'**il comporte des moyens (22) permettant de contrôler l'état de vie d'une personne humaine dont le bout du doigt (5) est appuyé contre ladite surface (31).

5. Détecteur selon l'une quelconque des revendications précédentes 1 à 3, **caractérisé en ce qu'**il comporte des moyens (22) permettant de contrôler l'état de conscience d'une personne humaine dont un bout de doigt (5) est appuyé contre ladite surface (31).

6. Détecteur selon la revendication 4 ou 5, dans lequel des moyens de contrôle sont adaptés pour détecter une circulation sanguine à l'intérieur dudit doigt.

7. Détecteur selon la revendication 4 ou 5 ou 6 dans lequel lesdits moyens de contrôle sont adaptés pour détecter un battement de coeur de ladite personne humaine en question.

8. Détecteur selon la revendication 4 ou 5, ou 6 ou 7, dans lequel lesdits moyens de contrôle comportent un capteur optique de lumière infrarouge (22).

9. Détecteur selon l'une quelconque des revendications précédentes, dans lequel ledit capteur optique (21) est intégré dans une puce (2) et est, de préférence, du type CCD et APS.

10. Détecteur selon la revendication 9, dans lequel ledit capteur optique de lumière visible (21) et ledit capteur optique de lumière infrarouge (22) sont intégrés dans la même puce (2).

11. Détecteur selon la revendication 9, dans lequel ledit capteur optique de lumière visible et ledit capteur optique de lumière infrarouge sont intégrés dans deux puces différentes, lesdites puces étant logées à l'intérieur du même boîtier.

12. Détecteur selon l'une quelconque des revendications précédentes, dans lequel ledit capteur optique (21) comporte de 50 000 à 250 000 éléments de capteur organisés sous la forme d'une matrice.

13. Détecteur selon l'une quelconque des revendications précédentes, dans lequel ledit capteur optique (21) présente une surface comprise entre 5 et 25 mm².

14. Détecteur selon l'une quelconque des revendications précédentes, **caractérisé par** le fait de détecter des empreintes digitales au niveau d'une résolution supérieure à 200 dpi (points par pouce), de préférence supérieure à 250 dpi, et inférieure à 600 dpi, de préférence inférieure à 500 dpi.

15. Détecteur selon l'une quelconque des revendications précédentes, dans lequel ladite surface (31) présente une aire comprise entre 1 et 5 cm^{2.}

16. Dispositif de contrôle d'identité, **caractérisé en ce qu'**il comprend un détecteur (1) selon l'une quelconque des revendications précédentes.

17. Dispositif selon la revendication 16, **caractérisé en ce qu'**il comporte des moyens de communication (RTX) adaptés pour communiquer avec une unité centrale d'un système de sécurité.

18. Dispositif selon la revendication 16 ou 17, **caractérisé en ce qu'**il comprend des moyens de mémoire non volatile (EE) adaptés pour stocker un ensemble d'empreintes digitales.

19. Dispositif selon la revendication 18, **caractérisé en ce qu'**il comprend un processeur (uP) connecté au dit détecteur (21, 22) et auxdits moyens de mémoire, et adapté pour réaliser une comparaison entre une empreinte digitale détectée par ledit détecteur (1) et des empreintes digitales stockées à l'intérieur desdits moyens de mémoire (EE).

20. Dispositif selon la revendication 19, dans lequel ledit processeur (uP) qui est connecté auxdits moyens de communication (RTX) est adapté pour transmettre à ladite unité centrale le résultat de ladite comparaison, de préférence dans un format codé.

21. Dispositif selon la revendication 16 ou 17,
**caractérisé en ce qu'**il comporte des moyens de commande (uP), comprenant, de préférence, un processeur connecté au dit détecteur (21, 22) et auxdits moyens de communication (RTX), et adaptés pour transmettre à ladite unité centrale une empreinte digitale détectée par ledit détecteur (1).

22. Dispositif selon la revendication 21, **caractérisé en ce qu'**il comprend des moyens de codage (EN) adaptés pour coder une empreinte digitale détectée par ledit détecteur (1).

23. Dispositif selon les revendications 21 et 22, dans lequel lesdits moyens de commande (uP) sont adaptés pour transmettre à ladite unité centrale des empreintes digitales codées par lesdits moyens de codage (EN).

24. Dispositif selon l'une quelconque des revendications précédentes 21 à 23, **caractérisé par le fait que** lesdits moyens de commande (uP) sont adaptés pour acquérir de façon consécutive au moins deux empreintes digitales afin de permettre la détection d'une situation de danger par ladite unité centrale.

25. Dispositif selon l'une quelconque des revendications précédentes 16 à 24, **caractérisé en ce qu'**il comprend des moyens de commande (uP), comportant, de préférence, un microprocesseur, adapté pour délivrer une requête d'empreinte digitale à un utilisateur.

26. Dispositif selon l a revendication 25, dans lequel lesdits moyens de commande (uP) sont adaptés pour délivrer ladite requête si une opération de comparaison d'une empreinte digitale précédente a conduit a un niveau de comparaison supérieur à une valeur de seuil inférieure et inférieur à une valeur de seuil supérieure.

27. Dispositif selon l'une quelconque des revendications précédentes 16 à 26, **caractérisé en ce qu'**il comporte un verrouillage.

28. Dispositif selon l'une quelconque des revendications 16 à 27, **caractérisé en ce qu'**il comporte un clavier.

29. Dispositif selon l'une quelconque des revendications 16 à 28, **caractérisé en ce qu'**il comporte un écran.

30. Dispositif selon l'une quelconque des revendications 16 à 29, **caractérisé en ce qu'**il comporte un haut-parleur.

31. Dispositif selon l'une quelconque des revendications 16 à 30, **caractérisé en ce qu'**il comporte un microphone.
